# EUROPÄISCHE PATENTANMELDUNG

(11) **EP 4 729 213 A1**
(43) Veröffentlichungstag der Anmeldung: **22.04.2026**
(21) Anmeldenummer: 24207535.6
(22) Anmeldetag: 18.10.2024
(51) Int. Cl.: B22F 10/85, B22F 10/22, B22F 10/25, B22F 10/38, B22F 12/90, B23K 9/04, B23K 9/095, B23K 26/00, B23K 26/342, B23K 31/00, B33Y 10/00, B33Y 30/00, B33Y 50/02

(54) **VERFAHREN UND VORRICHTUNG FÜR EINE ADDITIVE HERSTELLUNG WENIGSTENS EINER SCHICHT**

(71) Anmelder: Siemens Aktiengesellschaft, 80333 München (DE)
(72) Erfinder: Breuer, Marius, 81925 München (DE)
(74) Vertreter: Siemens Patent Attorneys

(57) **Zusammenfassung**

Es wird ein Verfahren für eine additive Herstellung wenigstens einer Schicht vorgeschlagen, wobei der Schicht eine ermittelte Bewertungskennzahl zugeordnet wird, umfassend die Schritte:
- a.) Festlegen eines Schweißnahtverlaufs und Bereitstellen von abhängigen Herstellungsdaten für den Schweißnahtverlauf;
- b.) Additives Herstellen einer von den Herstellungsdaten abhängigen Schicht; und
- c.) Erfassen einer Oberfläche der additiv hergestellten Schicht, wobei eine Schichtdicke, relativ zu einer Ausgangsschicht erfasst wird,
dadurch gekennzeichnet, dass
- für die Bereitstellung der Herstellungsdaten eine Datenbank bereitgestellt wird, wobei der festgelegte Schweißnahtverlauf mit wenigstens einen Schweißnahtprofil der Datenbank und wenigstens einen Schweißtropfenform der Datenbank verknüpft wird, wobei das Schweißnahtprofil wenigstens einen Wert der Schichtdicke umfasst; und
- zur Ermittlung der Bewertungskennzahl ein Referenzbild der Oberfläche aus den Herstellungsdaten bereitgestellt wird und ein Vergleich zwischen dem Referenzbild und einem erfassten Abbild der Oberfläche erfolgt, wobei der Vergleich derart erfolgt, dass ein überschüssiger und/oder ein geringerer und/oder ein ungleichmäßiger Materialauftrag relativ zum Abbild der Oberfläche ermittelt wird.

Weiterhin betrifft die Erfindung eine Vorrichtung.

## Beschreibung

Die Erfindung betrifft ein Verfahren gemäß dem Oberbegriff des Patentanspruches 1 sowie eine Vorrichtung gemäß dem Oberbegriff des Patentanspruches 10.

In der CAM-Planung additiv gefertigter Bauteile werden verschiedene Bahnmuster verwendet, um den Bauteilquerschnitt zu generieren. Ein häufig eingesetztes Muster ist das Zick-Zack-Füllmuster, bei dem die Bahnen diagonal oder parallel zur Bauteilkante verlaufen. Allerdings führt dieses Muster aufgrund seiner welligen Oberfläche und der Notwendigkeit einer Nachbearbeitung oft zu Problemen, insbesondere bei endkonturnahen oder unbearbeiteten Bauteilseiten.

Um diese Probleme zu umgehen, werden stattdessen oft eine oder mehrere Außenkonturen aufgetragen, wodurch jedoch der verbleibende Hohlraum nicht restlos mit weiteren Konturen gefüllt werden kann. Dies liegt daran, dass die Bauteilbreite in vielen Fällen nicht exakt ein Vielfaches der Spurbreite der Materialextrusion ist.

Die Herausforderung besteht darin, den Abstand der Spuren zueinander sowie die Überlappungen der Bahnmuster so zu optimieren, dass eine aufgetragene Schicht möglichst eben ist. Eine zu geringe Überlappung kann zu Hohlräumen führen, die das Bauteil unbrauchbar machen. Vor allem an den Eckpunkten des Bauteils kann es vorkommen, dass das Füllmuster den benötigten Querschnitt nicht vollständig ausfüllt. Auf der anderen Seite kann eine zu große Überlappung dazu führen, dass an den Punkten der Überlappung zu viel Material aufgetragen wird, was in den folgenden Schichten zu Defekten oder Kollisionen mit dem Werkzeug führen kann.

Der vorliegenden Erfindung liegt die Aufgabe zugrunde, eine Schicht additiv, mit einer besseren Qualität, herzustellen.

Die Aufgabe wird durch ein Verfahren mit den Merkmalen des unabhängigen Patentanspruches 1 sowie durch eine Vorrichtung mit den Merkmalen des unabhängigen Patentanspruches 10 gelöst. In den abhängigen Patentansprüchen sind vorteilhafte Ausgestaltungen und Weiterbildungen der Erfindung angegeben.

Das erfindungsgemäße Verfahren für eine additive Herstellung wenigstens einer Schicht, wobei der Schicht eine ermittelte Bewertungskennzahl zugeordnet wird, umfasst die Schritte:
- a.) Festlegen eines Schweißnahtverlaufs und Bereitstellen von abhängigen Herstellungsdaten für den Schweißnahtverlauf;
- b.) Additives Herstellen einer von den Herstellungsdaten abhängigen Schicht; und
- c.) Erfassen einer Oberfläche der additiv hergestellten Schicht, wobei eine Schichtdicke, relativ zu einer Ausgangsschicht erfasst wird,
dadurch gekennzeichnet, dass
- für die Bereitstellung der Herstellungsdaten eine Datenbank bereitgestellt wird, wobei der festgelegte Schweißnahtverlauf mit wenigstens einem Schweißnahtprofil der Datenbank und wenigstens einer Schweißtropfenform der Datenbank verknüpft wird, wobei das Schweißnahtprofil wenigstens einen Wert der Schichtdicke umfasst; und
- zur Ermittlung der Bewertungskennzahl ein Referenzbild der Oberfläche aus den Herstellungsdaten bereitgestellt wird und ein Vergleich zwischen dem Referenzbild und einem erfassten Abbild der Oberfläche erfolgt, wobei der Vergleich derart erfolgt, dass ein überschüssiger und/oder ein geringerer und/oder ein ungleichmäßiger Materialauftrag relativ zum Abbild der Oberfläche ermittelt wird.

Die additive Herstellung umfasst Verfahren wie Wire Arc Additive Manufacturing (WAAM), Cold Metal Transfer (CMT) und insbesondere beschichtende Verfahren wie Laser Beam Machining (LBM), Laser Metal Deposition (LMD) und das Cold Spray Verfahren.

Die Schicht kann das Ergebnis eines Materialauftrags auf die Ausgangsschicht sein.

Die Ausgangsschicht kann als Träger zur additiven Herstellung der Schicht dienen. Sie kann relativ zu einem schichtweisen Herstellungsfortschritt eines additiven gefertigten Werkstücks verstanden werden, so hat jede Schicht eine Ausgangsschicht als ihren Träger.

Die Bewertungskennzahl kann dazu dienen, die Qualität der additiv hergestellten Schicht durch Vergleich des Referenzbildes mit dem erfassten Abbild der Oberfläche der Schicht zu bewerten. Die Bewertungskennzahl kann ein Prozentwert sein, der eine Übereinstimmung zwischen dem Referenzbild und dem erfassten Abbild der Oberfläche der Schicht ausdrückt. Mit anderen Worten kann die größte mögliche Übereinstimmung zwischen Referenzbild und Abbild mit 100% und die niedrigste mögliche Übereinstimmung mit 0% als ein Wert der Bewertungskennzahl ausgedrückt werden. Darüber hinaus kann die Bewertungskennzahl auch als ein Score auf einer Skala von, insbesondere 1 bis 10 ausgedrückt werden, wobei 10 die größte mögliche Übereinstimmung zwischen

Der Schweißnahtverlauf kann den Verlauf einer Schweißnaht und die Schichtdicke umfassen, wobei der Schweißnahtverlauf mit einem Werkzeugpfad in allen drei Dimensionen eines Produktionsraumes einer Maschine zur additiven Herstellung korrespondieren kann. Der Schweißnahtverlauf kann als ein Ausgangspunkt für die Erzeugung von Herstellungsdaten verwendet werden.

Der Werkzeugpfad kann einen Pfad im Raum, entsprechen den von ihm realisierten kartesischen Koordinaten, üblicherweise angegeben in x-, y- und z-Richtung, umfassen. Dieser Pfad wird während der additiven Herstellung der Schicht durch ein Werkzeug der Maschine zur additiven Herstellung befahren, wobei der Pfad als ein virtueller Pfad verstanden werden kann, welchem das Werkzeug folgt.

Der Produktionsraum umfasst den Raum, abbildbar in kartesischen Koordinaten, in welchem die additive Herstellung der Schicht erfolgen kann. Der Produktionsraum kann für die Umgebung offen gestaltet sein, was für Herstellungsverfahren mit geringen Prozesstemperaturen geeignet ist, häufiger wird er durch Verglasung oder ähnliche Schutzeinrichtungen von außen abgeschirmt, um insbesondere Verunreinigungen zu vermeiden oder die Umgebung vor hohen Temperaturen oder einer Schadstoffbelastung zu schützen. Für manche Verfahren kann dieser Raum mit einem Prozessgas oder Schutzgas befüllt oder evakuiert werden.

Die Herstellungsdaten für eine additiv herstellbare Schicht können wenigstens einen Schweißnahtverlauf, wenigstens ein Schweißnahtprofil und wenigstens eine Schweißtropfenform umfassen. Für die additive Herstellung eines mehrschichtigen Werkstücks können Herstellungsdaten für eine Reihe von Schichten in einem gemeinsam Herstellungsdatensatz gebündelt werden, wobei für jede Schicht die spezifischen Herstellungsdaten verwendet werden können.

Das Schweißnahtprofil umfasst die Beschreibung einer Fläche, wobei die Fläche einer Querschnittsfläche einer Schweißnaht entsprechen kann. Dieses Schweißnahtprofil tritt insbesondere zu Tage, wenn man eine Schweißnaht orthogonal zu einer Richtung ihres Schweißnahtverlaufs zersägt und eine freigelegte Oberfläche der beiden auseinander gesägten Hälften begutachtet. Hierbei wird erkennbar, dass das Schweißnahtprofil eine Höhe, Breite und Einbrandbreite aufweisen kann.

Die Schweißtropfenform beschreibt die Form einzelner Schweißtropfen, die aus einem Werkzeug zur additiven Herstellung abgegeben werden können. Hierbei kann eine Aneinanderreihung von ausgewählten Tropfenformen zur Herstellung eines individuellen Schweißnahtprofils führen.

Die Datenbank kann Daten bereitstellen, diese umfassen Schweißnahtprofile, und Schweißtropfenformen. Durch die Datenbank können Schweißnahtprofile mit für deren Herstellung benötigten Schweißtropfenformen verknüpft werden. Die Datensätze für diese Datenbank können durch entsprechende Vorversuche oder Simulationen gewonnen werden.

Es können sowohl relationale als auch dokumentbasierte Datenbankschemata verwendet werden. Der Datenbankbegriff schließt außerdem nicht den Einsatz von Dateiformaten wie CSV oder JSON für die die Bereitstellung der Daten aus, wobei hierzu die Dateien, in Kontrast zum Datenbankansatz, vorab zur Verarbeitung, insbesondere durch einen Parser geladen werden müssen.

Das Referenzbild kann mit Hilfe der Herstellungsdaten bereitgestellt werden, wobei das Referenzbild eine ideale Oberfläche der hergestellten Schicht abbilden kann. Das Referenzbild kann einen Verlauf abbilden, wobei der Verlauf Überlagerungen oder die Abwesenheit von Überlagerungen von Schweißnahtprofilen sichtbar machen kann. Das Referenzbild kann auch ein fotorealistisches Abbild sein, welches mit Hilfe von einer generativen künstlichen Intelligenz und den bereitgestellten Herstellungsdaten erzeugt wurde, sein.

Durch die vorliegende Erfindung wird ein Verfahren zur vorteilhaften additiven Herstellung einer Schicht beschrieben. Das ist deshalb der Fall, weil ausgehend vom festgelegten Schweißnahtverlauf, durch Einsatz der Datenbank wenigstens ein passendes Schweißnahtprofil und wenigstens eine passende Schweißtropfenform verknüpft werden, um für die Herstellung des Schweißnahtverlaufs benötigte Herstellungsdaten bereitzustellen. Dieses Vorgehen erspart eine zeitintensive Durchführung von Vorversuchen, wobei mit verschiedenen Schweißnahtprofilen und Schweißtropfenformen experimentell eine ideale Kombination ermittelt wird.

Die erfindungsgemäße Vorrichtung für eine additive Herstellung wenigstens einer Schicht, umfasst eine Recheneinheit, wobei die Recheneinheit dazu ausgebildet ist, der Schicht eine ermittelte Bewertungskennzahl zuzuordnen und die Recheneinheit für ein:
- a.) Festlegen eines Schweißnahtverlaufs und Bereitstellen von abhängigen Herstellungsdaten für den Schweißnahtverlauf;
- b.) Additives Herstellen einer von den Herstellungsdaten abhängigen Schicht; und
- c.) Erfassen einer Oberfläche der additiv hergestellten Schicht, wobei eine Schichtdicke, relativ zu einer Ausgangsschicht erfasst wird, ausgebildet ist,
dadurch gekennzeichnet, dass
- die Vorrichtung für die Bereitstellung der Herstellungsdaten eine Datenbank umfasst und dazu ausgebildet ist, den festgelegten Schweißnahtverlauf mit wenigstens einem Schweißnahtprofil der Datenbank und wenigstens einer Schweißtropfenform der Datenbank zu verknüpfen, wobei das Schweißnahtprofil wenigstens einen Wert der Schichtdicke umfasst; und
- die Recheneinheit zu einer Ermittlung der Bewertungskennzahl ausgebildet ist, wobei ein Referenzbild der Oberfläche aus den Herstellungsdaten bereitgestellt wird und die Recheneinheit dazu ausgebildet ist einen Vergleich zwischen dem Referenzbild und einem erfassten Abbild der Oberfläche bereitzustellen, wobei der Vergleich derart erfolgt, dass ein überschüssiger und/oder ein geringerer und/oder ein ungleichmäßiger Materialauftrag relativ zum Abbild der Oberfläche ermittelbar ist.

Die Recheneinheit kann ein in die Maschine zur additiven Herstellung integrierter Prozessrechner sein, wobei auch eine nachträgliche Integration der Recheneinheit als eine separate Einheit in die Maschine zur additiven Herstellung möglich ist. Abseits einer lokalen Integration der Recheneinheit kann die Recheneinheit auch über ein Netzwerk, insbesondere das Internet, an die Maschine zur additiven Herstellung angebunden sein und so für eine Verwendung aus der Ferne ausgebildet sein.

Durch die vorliegende Erfindung wird eine Vorrichtung zu einer vorteilhaften Bewertung einer Oberflächenqualität beschrieben. Das ist deshalb der Fall, weil die in Punkt a.) bereitgestellten Herstellungsdaten für eine vorteilhafte Bereitstellung des Referenzbildes genutzt werden, dadurch entfällt die zeitintensive und sehr individuelle Aufnahme von Referenzbildern.

Gemäß einer vorteilhaften Ausgestaltung wird wenigstens ein Schweißnahtverlauf mit wenigstens einem Schweißnahtprofil abhängig von einer Oberflächentemperatur der Ausgangsschicht und/oder einer Masse, einer Wärmeleitfähigkeit und/oder einer Gesamtoberfläche eines die additiv hergestellte Schicht umfassenden Werkstücks verknüpft.

Das Werkstück kann eine Anzahl von additiv hergestellten Schichten umfassen und abhängig von einer Zielgeometrie des Werkstücks kann eine Abführung von einer Prozesswärme während der additiven Herstellung mit einer steigenden Anzahl von Schichten mehr oder weniger gut erfolgen.

Dadurch ist es vorteilhafterweise möglich eine Bereitstellung noch passenderer Herstellungsdaten zu ermöglichen, da noch mehr, für das Werkstück spezifische Werte, für die Verknüpfung von Schweißnahtverlauf und Schweißnahtprofil berücksichtig werden können.

In einer vorteilhaften Weiterbildung der Erfindung wird die Oberflächentemperatur der Ausgangsschicht entlang eines Werkzeugpfads und/oder über die gesamte Ausgangsschicht erfasst.

Dadurch ist es vorteilhafterweise möglich, die Herstellungsdaten noch individueller und damit noch passender bereitzustellen, wobei die Erfassung entlang des Werkzeugpfades vorteilhafterweise eine genauere Einschätzung über eine mögliche Einbrandbreite des Schweißnahtprofils erlaubt und die Erfassung über die gesamte Ausgangsschicht hingegen vorteilhafterweise eine genauere Berechnung der Temperatur innerhalb des Werkstücks erlaubt.

Gemäß einer vorteilhaften Ausgestaltung umfasst das Schweißnahtprofil einen Temperaturgrenzwert, wobei dieser Temperaturgrenzwert während der additiven Herstellung mit der erfassten Oberflächentemperatur der Ausgangsschicht verglichen wird, sodass bei einer Verletzung des Temperaturgrenzwertes die Herstellungsdaten während der Herstellung angepasst werden, wobei der Schweißnahtverlauf erneut mit einem Schweißnahtprofil verknüpft wird, sodass der Temperaturgrenzwert eingehalten wird.

Dadurch ist es vorteilhafterweise möglich die Herstellungsdaten dynamisch zum Herstellungsprozess zu verändern. Das ist deshalb der Fall, weil die Verletzung des Temperaturgrenzwertes, während der Herstellung, als ein Trigger für eine erneute Verknüpfung von Schweißnahtverlauf und Schweißnahtprofil wirkt. Die Dynamisierung der Anpassung von Herstellungsdaten erlaubt ein vorteilhaftes Eingreifen während der Herstellung, ohne die Herstellung komplett abzubrechen oder abzuwarten und eine erneute Herstellung mit angepassten Herstellungsdaten starten zu müssen. Dies kann zu einem erheblichen Zeit- und Ressourcenersparnis führen.

In einer vorteilhaften Weiterbildung der Erfindung wird das Schweißnahtprofil mit einer Tropffrequenz in der Datenbank verknüpft.

Die Tropffrequenz kann ein Maß für die Menge von Schweißtropfen, die pro Zeiteinheit durch das Werkzeug zur additiven Herstellung abgegeben werden, sein.

Dadurch kann vorteilhafterweise, ergänzend zu der Auswahl von Schweißtropfenformen, durch eine Veränderung der Tropffrequenz ein individuelles Schweißnahtprofil abgebildet werden. Mit anderen Worten kann die Veränderung der Tropffrequenz eine weitere Stellgröße darstellen, die eine vorteilhafte flexiblere Erzeugung von Schweißnahtprofilen ermöglicht oder vorteilhafterweise eine größere Bandbreite an möglichen Schweißnahtprofilen herstellbar macht.

Gemäß einer vorteilhaften Ausgestaltung umfassen die bereitgestellten Herstellungsdaten einen Toleranzbereichswert für den Vergleich der Schichtdicken zwischen dem Referenzbild und dem Abbild der Oberfläche, wobei dieser Toleranzbereichswert abhängig vom verwendeten Schweißnahtprofil ist.

Dadurch ist es vorteilhafterweise möglich eine Menge an Ausschussteilen zu verringern, da der Toleranzbereich angeben kann, welche Herstellungsabweichungen noch akzeptabel sind, sodass Werkstücke bei geringeren Abweichungen nicht pauschal, als Ausschuss deklariert werden. Darüber hinaus ermöglicht eine Zuordnung von individuellen Toleranzbereichen für einzelne Schweißnahtprofile eine weitere vorteilhafte Reduzierung von Ausschussteilen, da unterschiedliche Schweißnahtprofile unterschiedliche Toleranzbereiche umfassen können.

In einer vorteilhaften Weiterbildung der Erfindung wird die Verknüpfung zwischen dem festgelegten Schweißnahtverlauf und dem Schweißnahtprofil der Datenbank durch ein künstliches neuronales Netz bereitgestellt, wobei das künstliche neuronale Netz aus Daten, umfassend Schweißnahtverläufe und/oder Schweißnahtprofile und/oder Schweißtropfenformen und/oder Tropffrequenz und Abbilder der mittels dieser Daten hergestellten Oberflächen bereitgestellt wird, wobei das künstliche neuronale Netz den festgelegten Schweißnahtverlauf als eine Eingangsgröße aufweist und als eine Ausgangsgröße das Schweißnahtprofil bereitstellt.

Dadurch können vorteilhafterweise neue Verknüpfungen zwischen Schweißnahtverläufen und Schweißnahtprofilen bereitgestellt werden, welche noch nicht explizit in der Datenbank hinterlegt wurden. Hierdurch können vorteilhafterweise zeit- und kostenintensive Vorversuche für eine große Zahl an Kombinationen von Eingangsgrößen und Ausgangsgrößen entfallen.

Gemäß einer vorteilhaften Ausgestaltung wird die Bewertungskennzahl durch eine gewichtete Summe aus dem ermittelten überschüssigen und/oder geringeren und/oder ungleichmäßigen Materialauftrag ausgebildet.

Dadurch ist es vorteilhafterweise möglich bestimmte Merkmale der Oberfläche der hergestellten Schicht im Vergleich zwischen dem Referenzbild und einem erfassten Abbild der Oberfläche stärker zu berücksichtigen, insbesondere kann ein ungleichmäßiger Materialauftrag stärker berücksichtigt werden als ein überschüssiger oder geringerer Materialauftrag. Das ist besonders vorteilhaft, wenn keine weitere Schicht additive aufgebracht wird und nur kleine Areale mit überschüssigen oder geringen Materialauftrag nachbearbeitet werden können.

In einer vorteilhaften Weiterbildung der Erfindung werden die Gewichte der gewichteten Summe abhängig von der Ausgangsschicht und/oder abhängig von weiteren aufzubringenden Schichten auf die additiv gefertigte Schicht, ausgebildet.

Dadurch können vorteilhafterweise bestimmte Merkmale der Oberfläche der hergestellten Schicht im Vergleich zwischen dem Referenzbild und einem erfassten Abbild der Oberfläche stärker zu berücksichtigen, insbesondere wenn sich diese besonders negativ auf die Herstellung weiterer Schichten auswirken, so kann insbesondere ein überschüssiger oder geringerer Materialauftrag stärker berücksichtigt werden als ein ungleichmäßiger Materialauftrag. Dies kann besonders vorteilhaft sein, denn der überschüssige oder geringere Materialauftrag kann sich stärker negativ auf weitere additiv aufgebrachte Schichten auswirken als eine ungleichmäßige Verteilung.

Gemäß einer vorteilhaften Ausgestaltung ist wenigstens eine Sensoreinheit zu einer Durchführung eines Laserscans und/oder einer mechanischen Abtastung zur Erfassung der Oberfläche der additiv hergestellten Schicht ausgebildet.

Der Laserscan kann das Ergebnis einer berührungslosen optischen Abtastung der Oberfläche der additiv hergestellten Schicht, insbesondere mittels eines LiDAR-Scanners oder einer ToF-Kamera sein.

Die mechanische Abtastung kann mittels eines Tastwerkzeugs erfolgen, welches vorgegebene Prüfpunkte entlang einer Kontur der additiv hergestellten Schicht abfährt.

Dadurch ist es vorteilhafterweise möglich die Oberfläche der Schicht zu erfassen, wobei ein Profil mit tatsächlichen Höhen und Tiefen aufgenommen werden kann, das ist besonders vorteilhaft im Vergleich zu einem 2D-Kamerabild, bei dem Höhen und Tiefen in der Oberfläche nur nachträglich mittels Bildverarbeitung geschätzt werden können.

In einer vorteilhaften Weiterbildung der Erfindung ist die Recheneinheit dazu ausgebildet, wenigstens einen Schweißnahtverlauf mit wenigstens einem Schweißnahtprofil abhängig von einer Oberflächentemperatur der Ausgangsschicht zu verknüpften, wobei eine Temperaturerfassungseinheit zu einer Erfassung der Oberflächentemperatur und deren Bereitstellung für die Recheneinheit ausgebildet ist.

Die Temperaturerfassungseinheit kann insbesondere ein berührungslos messendes Verfahren nutzen.

Dadurch kann vorteilhafterweise eine Bereitstellung noch passenderer Herstellungsdaten zu ermöglichen, da die Oberflächentemperatur eine weitere Einflussgröße für die Verknüpfung von Schweißnahtverlauf und Schweißnahtprofil darstellt.

Gemäß einer vorteilhaften Ausgestaltung ist die Temperaturerfassungseinheit dazu ausgebildet, die Oberflächentemperatur der Ausgangsschicht entlang eines Werkzeugpfads und/oder die Ausgangsschicht zu erfassen und der Recheneinheit bereitzustellen.

Dadurch ist es vorteilhafterweise möglich die Herstellungsdaten noch individueller und damit noch passender bereitzustellen, wobei die Erfassung entlang des Werkzeugpfades vorteilhafterweise eine genauere Einschätzung über eine mögliche Einbrandbreite des Schweißnahtprofils erlaubt und die Erfassung über die gesamte Ausgangsschicht hingegen vorteilhafterweise eine genauere Berechnung der Temperatur innerhalb des Werkstücks erlaubt.

In einer vorteilhaften Weiterbildung der Erfindung umfasst das Schweißnahtprofil einen Temperaturgrenzwert, wobei die Recheneinheit dazu ausgebildet ist, den Temperaturgrenzwert während der additiven Herstellung mit der erfassten Oberflächentemperatur der Ausgangsschicht zu vergleichen und die Recheneinheit dazu ausgebildet ist, bei einer Verletzung des Temperaturgrenzwertes die Herstellungsdaten während der Herstellung anzupassen, sodass der Schweißnahtverlauf erneut mit einem Schweißnahtprofil verknüpft ist und der Temperaturgrenzwert des Schweißnahtprofils einhaltbar ist.

Dadurch können vorteilhafterweise die Herstellungsdaten dynamisch zum Herstellungsprozess verändert werden. Das ist deshalb der Fall, weil die Verletzung des Temperaturgrenzwertes, während der Herstellung, als ein Trigger für eine erneute Verknüpfung von Schweißnahtverlauf und Schweißnahtprofil wirkt. Die Dynamisierung der Anpassung von Herstellungsdaten erlaubt ein vorteilhaftes Eingreifen während der Herstellung, ohne die Herstellung komplett abzubrechen oder abzuwarten und eine erneute Herstellung mit angepassten Herstellungsdaten starten zu müssen. Dies kann zu einem erheblichen Zeit- und Ressourcenersparnis führen.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:
- Figur 1: eine Darstellung von drei Schweißnahtprofilen;
- Figur 2: eine Darstellung zweier Werkzeuge für eine Abgabe zwei verschiedener Schweißtropfen;
- Figur 3: eine Darstellung einer Materialverteilung für einen Schweißtropfen;
- Figur 4: eine Darstellung einer Materialverteilung für einen Schweißtropfen im Vergleich zu einer schematischen Darstellung der Materialverteilung einer Schweißnaht;
- Figur 5: eine Darstellung einer Datenbankrepräsentation für Schweißtropfen und Schweißnahtprofile;
- Figur 6: eine Darstellung verschiedener Materialverteilungen von Schweißnahtverläufen mit unterschiedlichen Bahnabständen im Querschnittsprofil; und
- Figur 7: die Vorrichtung für die additive Herstellung wenigstens einer Schicht.

Gleichartige, gleichwertige oder gleichwirkende Elemente können in einer der Figuren oder in den Figuren mit denselben Bezugszeichen versehen sein.

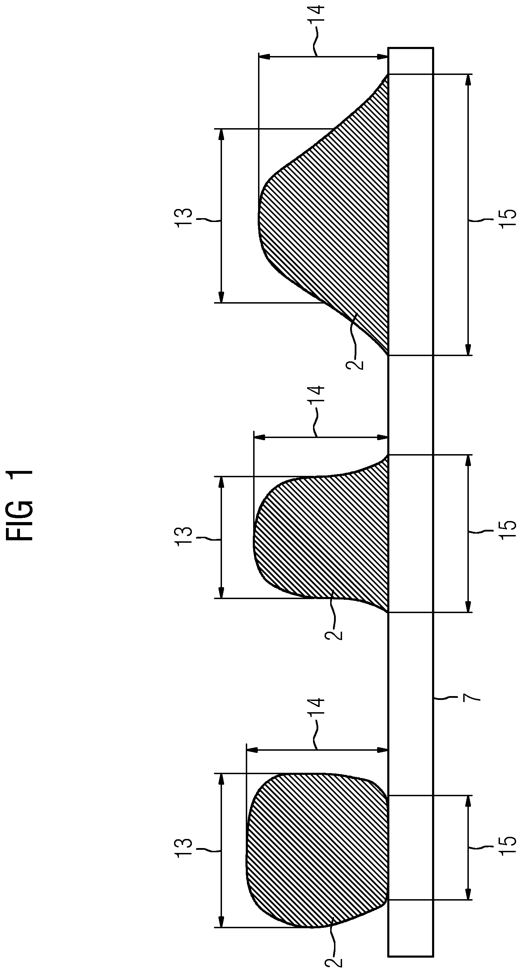

Die Figur 1 zeigt schematisch drei Schweißnahtprofile 2, welche auf einer gemeinsamen Ausgangsschicht 7 aufgebracht sind. Jedes Schweißnahtprofil wird durch wenigstens eine Breite 13, eine Höhe 14 und eine Einbrandbreite 15 beschrieben.

Für eine bessere Verständlichkeit wurden die Schweißnahtprofile 2 auf einer gemeinsamen Ausgangsschicht 7 dargestellt. Die verschiedenen Schweißnahtprofile 2 treten jedoch nicht in eine Wechselwirkung zueinander. Mit anderen Worten könnte die Darstellung auch dadurch erfolgen, dass jedes Schweißnahtprofil 2 auf einer eigenen Ausgangsschicht 7 abgebildet wird.

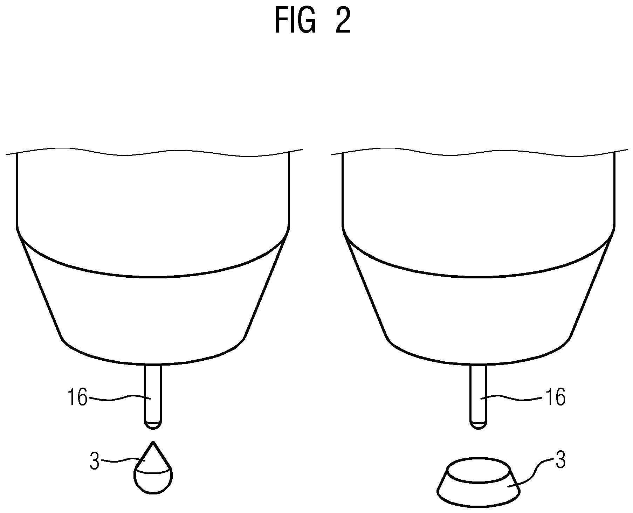

Die Figur 2 zeigt schematisch eine Darstellung zweier Werkzeuge 16 für eine Abgabe zwei verschiedener Schweißtropfen 3. Abhängig von der gewünschten Schweißtropfenform 3, kann die Einstellung des Werkzeugs 16 unterschiedlich gewählt werden.

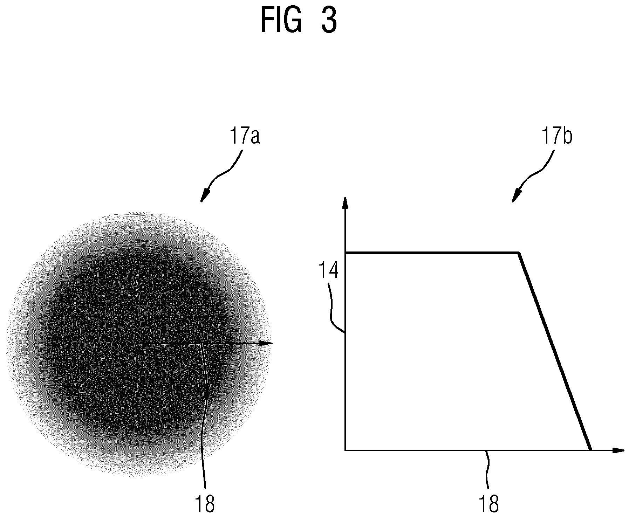

Die Figur 3 zeigt schematisch eine Darstellung einer Materialverteilung 17a für einen, insbesondere auf eine Ausgangsschicht 7, aufgebrachten Schweißtropfen, als einen kreisartigen Verlauf, welcher wenigstens durch einen Radius 18 beschrieben wird. Die Darstellung kann insbesondere, als ein monochromer Verlauf realisiert werden, wobei eine Kodierung von Farben in den Verlauf, in Form einer Heatmap, vorteilhafterweise weitere Materialeigenschaften kenntlich machen könnte.

Weiterhin beschreibt das Diagramm 17b die Materialverteilung des aufgebrachten Schweißtropfens 17a in Abhängigkeit zum Radius 18 und der Höhe 14, wobei die Höhe 14 auch als eine Schichtdicke 14 bezeichnet werden kann.

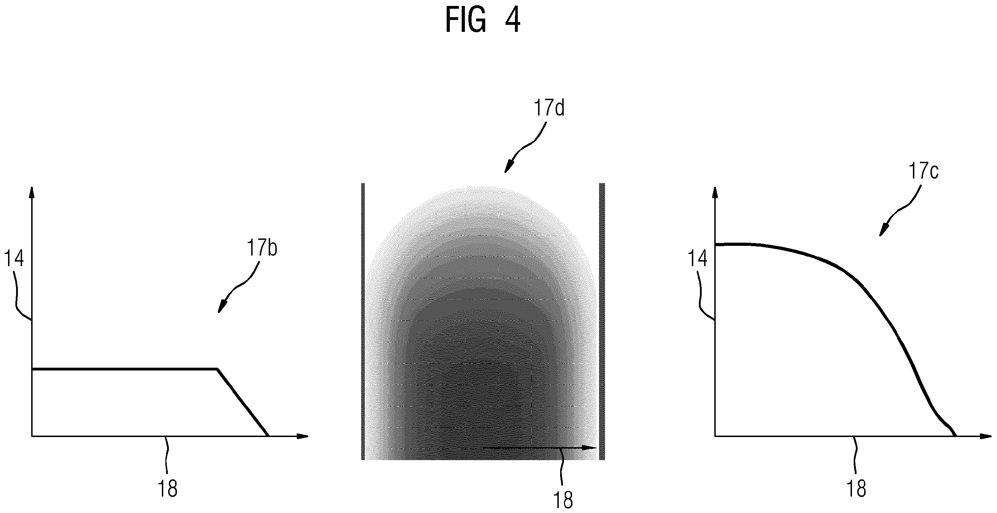

Die Figur 4 zeigt schematisch eine Darstellung einer Materialverteilung für einen, insbesondere auf eine Ausgangsschicht 7, aufgebrachten Schweißnaht 17d, welche wenigstens durch einen Radius 18 beschrieben wird.

Weiterhin beschreibt das Diagramm 17b die Materialverteilung des Schweißtropfens 17a bei Aufbringung in Abhängigkeit zum Radius 18 und der Höhe 14.

Das Diagramm 17c zeigt die Materialverteilung einer Schweißnaht 17d, in Abhängigkeit von Radius 18 und Höhe 14, welche durch Aneinanderreihung von aufgebrachten Schweißtropfen mit der Materialverteilung 17b, erzielt wird.

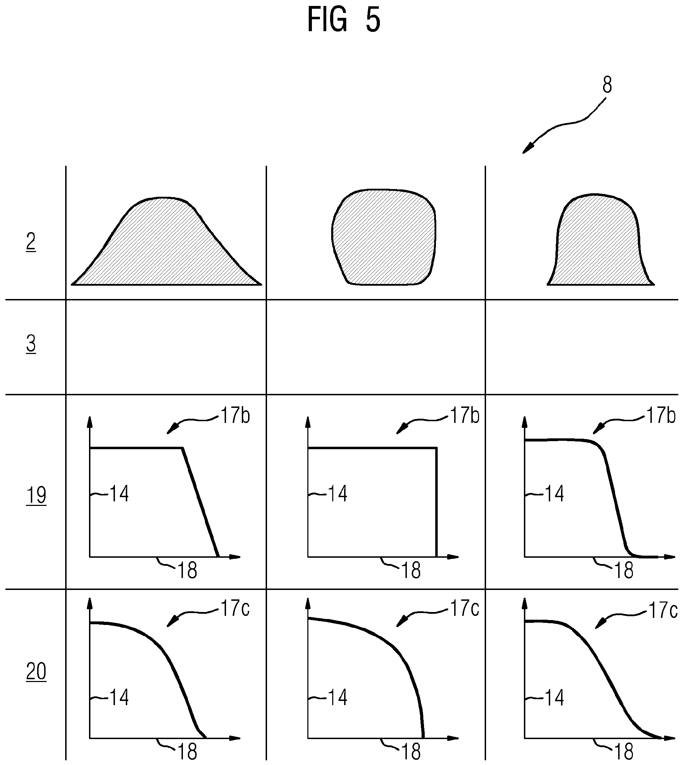

Die Figur 5 zeigt schematisch eine Darstellung einer Datenbankrepräsentation für Schweißtropfenformen 3 und Schweißnahtprofile 2, anhand eines Beispieldatensatz 8, wobei den Schweißtropfenformen 3 und Schweißnahtprofilen 2 entsprechende Materialverteilungen 19, 20 zugeordnet sind.

Durch den tabellarischen Charakter der Darstellung wird eine besondere Eignung für den Einsatz in relationale Datenbanken deutlich.

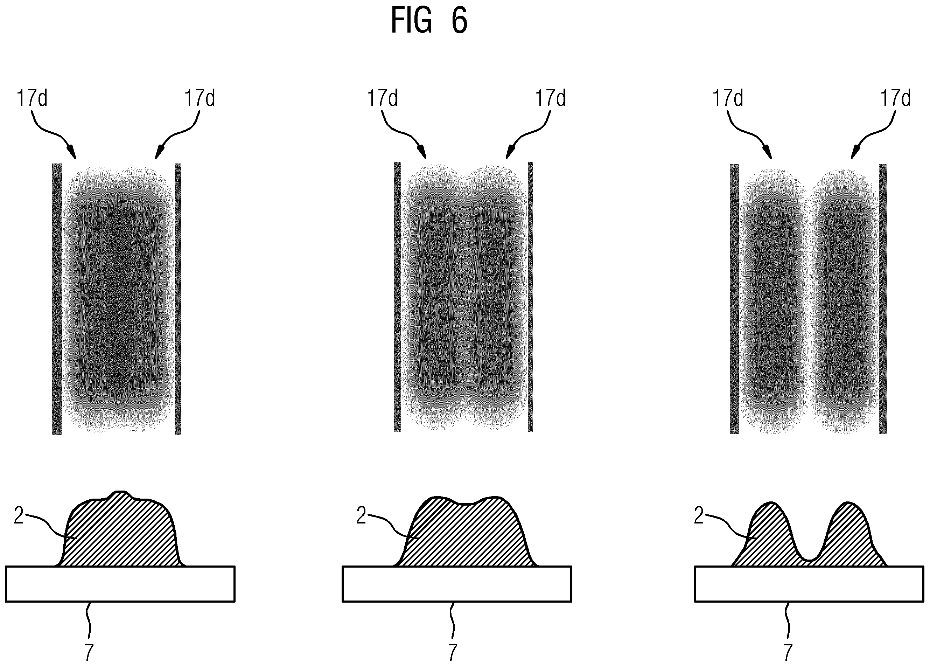

Die Figur 6 zeigt schematisch eine Darstellung verschiedener Materialverteilungen von Schweißnähten 17d mit unterschiedlichen Bahnabständen im Querschnittsprofil. Das Querschnittprofil umfasst das Schweißnahtprofil 2 und die Ausgangsschicht 7 im Profil.

Die drei gezeigten Schweißnähte 17d weißen, von links nach rechts, drei verschiedene Bahnabstände auf. Links wird eine Überlappung zweier Schweißnähte 17d abgebildet, in der Mitte zwei Schweißnähte 17d mit geringen Bahnabstand und rechts zwei Schweißnähte 17d mit großem Bahnabstand.

Bei Überlappungen können überschüssige Materialaufträge entstehen, wobei bei zu großen Bahnabständen ein geringerer Materialauftrag verzeichnet werden kann.

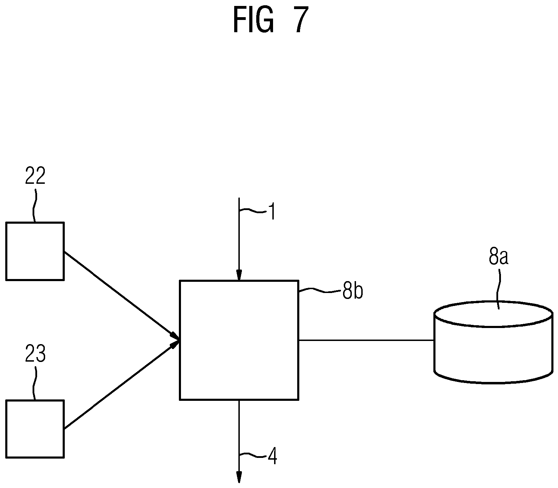

Die Figur 7 zeigt schematisch eine Vorrichtung umfassend eine Recheneinheit 8b, eine Datenbank 8a, eine Sensoreinheit 22 und eine Temperaturerfassungseinheit 23.

Die Recheneinheit 8b empfängt einen Schweißnahtverlauf 1 als einen Eingangswert, insbesondre als ein Datentelegramm, welches den Schweißnahtverlauf als ein Datenmodell umfasst. Anschließend verarbeitet die Recheneinheit 8b den empfangenen Schweißnahtverlauf 1, wobei anhand des Schweißnahtverlaufs 1, korrespondierende Schweißnahtprofile 2 und Schweißtropfenformen 3 aus der Datenbank 8a ermittelt werden.

Die genannte Korrespondenz zwischen Schweißnahtverlauf 1, Schweißnahtprofil 2 und Schweißtropfenform 3 bezieht sich auf die Ermittlung wenigstens eines Schweißnahtprofils 2 und Schweißtropfenform 3, welche für die Herstellung des festgelegten Schweißnahtverlaufs 1 geeignet ist.

Während einer Herstellung einer Schicht, kann eine Oberflächentemperatur der Schicht mittels der Temperaturerfassungseinheit 23 erfasst werden. In einer Ausgestaltung der Erfindung, ist es möglich anhand der erfassten Oberflächentemperatur, das verwendete Schweißnahtprofil 2 und/oder die Schweißtropfenform 3 der Oberflächentemperatur anzupassen.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 1: Schweißnahtverlauf
- 2: Schweißnahtprofil
- 3: Schweißtropfenform
- 4: Herstellungsdaten
- 6: Oberfläche der additiv hergestellten Schicht
- 7: Ausgangsschicht
- 8: Beispieldatensatz für die Datenbank
- 8a: Datenbank
- 8b: Recheneinheit
- 9: Referenzbild
- 10: Abbild
- 13: Breite
- 14: Höhe / Schichtdicke
- 15: Einbrandbreite
- 16: Werkzeug
- 17a: Materialverteilung eines Schweißtropfens
- 17b: Diagramm zur Materialverteilung eines Schweißtropfens
- 17c: Diagramm zur Materialverteilung einer Schweißnaht
- 17d: Materialverteilung einer Schweißnaht
- 18: Radius
- 19: Materialverteilung einzelner Schweißtropfen
- 20: Materialverteilung Schweißnaht
- 22: Sensoreinheit
- 23: Temperaturerfassungseinheit

## Patentansprüche

1. Verfahren für eine additive Herstellung wenigstens einer Schicht, wobei der Schicht eine ermittelte Bewertungskennzahl zugeordnet wird, umfassend die Schritte:
- a.) Festlegen eines Schweißnahtverlaufs (1) und Bereitstellen von abhängigen Herstellungsdaten (4) für den Schweißnahtverlauf (1);
- b.) Additives Herstellen einer von den Herstellungsdaten (4) abhängigen Schicht; und
- c.) Erfassen einer Oberfläche der additiv hergestellten Schicht, wobei eine Schichtdicke, relativ zu einer Ausgangsschicht (7) erfasst wird,
**dadurch gekennzeichnet, dass**
- für die Bereitstellung der Herstellungsdaten (4) eine Datenbank (8a) bereitgestellt wird, wobei der festgelegte Schweißnahtverlauf (1) mit wenigstens einem Schweißnahtprofil (2) der Datenbank (8a) und wenigstens einer Schweißtropfenform (3) der Datenbank (8a) verknüpft wird, wobei das Schweißnahtprofil (2) wenigstens einen Wert der Schichtdicke umfasst; und
- zur Ermittlung der Bewertungskennzahl ein Referenzbild (9) der Oberfläche aus den Herstellungsdaten (4) bereitgestellt wird und ein Vergleich zwischen dem Referenzbild (9) und einem erfassten Abbild (10) der Oberfläche erfolgt, wobei der Vergleich derart erfolgt, dass ein überschüssiger und/oder ein geringerer und/oder ein ungleichmäßiger Materialauftrag relativ zum Abbild (10) der Oberfläche ermittelt wird.

2. Verfahren gemäß Anspruch 1, **dadurch gekennzeichnet, dass** wenigstens ein Schweißnahtverlauf (1) mit wenigstens einem Schweißnahtprofil (2) abhängig von einer Oberflächentemperatur der Ausgangsschicht (7) und/oder einer Masse, einer Wärmeleitfähigkeit und/oder einer Gesamtoberfläche eines die additiv hergestellte Schicht umfassenden Werkstücks verknüpft wird.

3. Verfahren gemäß Anspruch 2, **dadurch gekennzeichnet, dass** die Oberflächentemperatur der Ausgangsschicht (7) entlang eines Werkzeugpfads und/oder über die gesamte Ausgangsschicht (7) erfasst wird.

4. Verfahren gemäß Anspruch 2 oder 3, **dadurch gekennzeichnet, dass** das Schweißnahtprofil (2) einen Temperaturgrenzwert umfasst, wobei dieser Temperaturgrenzwert während der additiven Herstellung mit der erfassten Oberflächentemperatur der Ausgangsschicht (7) verglichen wird, sodass bei einer Verletzung des Temperaturgrenzwertes die Herstellungsdaten (4) während der Herstellung angepasst werden, wobei der Schweißnahtverlauf (1) erneut mit einem Schweißnahtprofil (2) verknüpft wird, sodass der Temperaturgrenzwert eingehalten wird.

5. Verfahren gemäß einem der vorhergehenden Ansprüche, **dadurch gekennzeichnet, dass** das Schweißnahtprofil (2) mit einer Tropffrequenz in der Datenbank (8a) verknüpft wird.

6. Verfahren gemäß einem der vorhergehenden Ansprüche, **dadurch gekennzeichnet, dass** die bereitgestellten Herstellungsdaten (4) einen Toleranzbereichswert für den Vergleich der Schichtdicken zwischen dem Referenzbild (9) und dem Abbild (10) der Oberfläche umfassen, wobei dieser Toleranzbereichswert abhängig vom verwendeten Schweißnahtprofil (2) ist.

7. Verfahren gemäß einem der vorherigen Ansprüche, **dadurch gekennzeichnet, dass** die Verknüpfung zwischen dem festgelegten Schweißnahtverlauf (1) und dem Schweißnahtprofil (2) der Datenbank (8a) durch ein künstliches neuronales Netz bereitgestellt wird, wobei das künstliche neuronale Netz aus Daten, umfassend Schweißnahtverläufe und/oder Schweißnahtprofile (2) und/oder Schweißtropfenformen (3) und/oder Tropffrequenz und Abbilder (10) der mittels dieser Daten hergestellten Oberflächen bereitgestellt wird, wobei das künstliche neuronale Netz den festgelegten Schweißnahtverlauf (1) als eine Eingangsgröße aufweist und als eine Ausgangsgröße das Schweißnahtprofil (2) bereitstellt.

8. Verfahren gemäß einem der vorherigen Ansprüche, **dadurch gekennzeichnet, dass** die Bewertungskennzahl durch eine gewichtete Summe aus dem ermittelten überschüssigen und/oder geringeren und/oder ungleichmäßigen Materialauftrag ausgebildet wird.

9. Verfahren gemäß Anspruch 8, **dadurch gekennzeichnet, dass** die Gewichte der gewichteten Summe abhängig von der Ausgangsschicht (7) und/oder abhängig von weiteren aufzubringenden Schichten auf die additiv gefertigte Schicht, ausgebildet werden.

10. Vorrichtung für eine additive Herstellung wenigstens einer Schicht, umfassend eine Recheneinheit (8b), wobei die Recheneinheit (8b) dazu ausgebildet ist, der Schicht eine ermittelte Bewertungskennzahl zuzuordnen und die Recheneinheit (8b) für ein:
- a.) Festlegen eines Schweißnahtverlaufs (1) und Bereitstellen von abhängigen Herstellungsdaten (4) für den Schweißnahtverlauf (1);
- b.) Additives Herstellen einer von den Herstellungsdaten (4) abhängigen Schicht; und
- c.) Erfassen einer Oberfläche der additiv hergestellten Schicht, wobei eine Schichtdicke, relativ zu einer Ausgangsschicht (7) erfasst wird, ausgebildet ist,
**dadurch gekennzeichnet, dass**
- die Vorrichtung für die Bereitstellung der Herstellungsdaten (4) eine Datenbank (8a) umfasst und dazu ausgebildet ist den festgelegten Schweißnahtverlauf (1) mit wenigstens einen Schweißnahtprofil (2) der Datenbank (8a) und wenigstens einen Schweißtropfenform (3) der Datenbank (8a) zu verknüpfen, wobei das Schweißnahtprofil (2) wenigstens einen Wert der Schichtdicke umfasst; und
- die Recheneinheit (8b) zu einer Ermittlung der Bewertungskennzahl ausgebildet ist, wobei ein Referenzbild (9) der Oberfläche aus den Herstellungsdaten (4) bereitgestellt wird und die Recheneinheit (8b) dazu ausgebildet ist einen Vergleich zwischen dem Referenzbild (9) und einem erfassten Abbild (10) der Oberfläche bereitzustellen, wobei der Vergleich derart erfolgt, dass ein überschüssiger und/oder ein geringerer und/oder ein ungleichmäßiger Materialauftrag relativ zum Abbild (10) der Oberfläche ermittelbar ist.

11. Vorrichtung gemäß Anspruch 10, **dadurch gekennzeichnet, dass** wenigstens eine Sensoreinheit (22) zu einer Durchführung eines Laserscans und/oder einer mechanischen Abtastung zur Erfassung der Oberfläche der additiv hergestellten Schicht ausgebildet ist.

12. Vorrichtung gemäß Anspruch 10 oder 11, **dadurch gekennzeichnet, dass** die Recheneinheit (8b) dazu ausgebildet ist, wenigstens einen Schweißnahtverlauf (1) mit wenigstens einem Schweißnahtprofil (2) abhängig von einer Oberflächentemperatur der Ausgangsschicht (7) zu verknüpften, wobei eine Temperaturerfassungseinheit (23) zu einer Erfassung der Oberflächentemperatur und deren Bereitstellung für die Recheneinheit (8b) ausgebildet ist.

13. Vorrichtung gemäß Anspruch 12, **dadurch gekennzeichnet, dass** die Temperaturerfassungseinheit (23) dazu ausgebildet ist, die Oberflächentemperatur der Ausgangsschicht (7) entlang eines Werkzeugpfads und/oder die Ausgangsschicht (7) zu erfassen und der Recheneinheit (8b) bereitzustellen.

14. Vorrichtung gemäß Anspruch 12 oder 13, **dadurch gekennzeichnet, dass** das Schweißnahtprofil (2) einen Temperaturgrenzwert umfasst, wobei die Recheneinheit (8b) dazu ausgebildet ist, den Temperaturgrenzwert während der additiven Herstellung mit der erfassten Oberflächentemperatur der Ausgangsschicht (7) zu vergleichen und die Recheneinheit (8b) dazu ausgebildet ist, bei einer Verletzung des Temperaturgrenzwertes die Herstellungsdaten (4) während der Herstellung anzupassen, sodass der Schweißnahtverlauf (1) erneut mit einem Schweißnahtprofil (2) verknüpft ist und der Temperaturgrenzwert des Schweißnahtprofils (2) einhaltbar ist.
